# EUROPEAN PATENT APPLICATION

(11) **EP 4 625 601 A1**
(43) Date of publication of application: **01.10.2025**
(21) Application number: 24840089.7
(22) Date of filing: 10.07.2024
(51) Int. Cl.: H01M 10/42, H01M 10/48, G01N 21/88

(54) **ELECTRODE TRACKING DEVICE**

(30) Priority: 12.07.2023 KR 20230090256
(71) Applicant: LG Energy Solution, Ltd., Seoul 07335 (KR)
(72) Inventor: CHO, Hyeon Woo, Daejeon 34122 (KR)
(74) Representative: BCKIP Part mbB
(86) International application number: PCT/KR2024/009863
(87) International publication number: WO 2025/014279

(57) **Abstract**

Disclosed herein relates to an electrode tracking device for forming a marking on an electrode tab of an electrode being transferred in one direction, or identifying a marking formed on the electrode tab, including: a tracking part provided to move in at least one of horizontal and vertical directions, and including at least one tracking unit selected from a marker and a reader; a guide part including a first guide having an inclined surface at one end and supports one surface of the electrode tab, and a second guide having an inclined surface at a position corresponding to the inclined surface of the first guide and supports the other surface of the electrode tab; an interlocking part including a first support member coupled to the first guide at one end and coupled to the tracking part so that the other end can slide in upward and downward direction, and a second support member coupled to the second guide at one end and coupled to the tracking part so that the other end can slide in upward and downward direction; and a foreign matter accommodating part open to the upper part, wherein the foreign matter accommodating part is coupled to either the tracking part or the interlocking part.

## Description

### [Technical Field]

The present invention relates to an electrode tracking device that forms markings on the electrode tabs of an electrode being transferred in one direction, or identifies markings formed on the electrode tabs. The electrode tracking device of the present invention is characterized by including a foreign matter accommodating part that can collect fine foreign matter generated during operation or position change.

This application claims the benefit of priority from Korean Patent Application No. 10-2023-0090256, filed on July 12, 2023, the disclosure of which is incorporated herein by reference in its entirety.

### [Background Technology of the Invention]

Secondary batteries are gaining much attention as an energy source for various products such as mobile devices and electric vehicles. These secondary batteries are regarded as a promising energy resource that can replace conventional products using fossil fuels, as they do not produce by-products from energy use, making them popular as an eco-friendly energy source.

Based on the shape of the battery case, secondary batteries are classified into cylindrical or prismatic batteries, where the jelly-roll is embedded in a cylindrical or prismatic metal can, and pouch-type batteries, where the jelly-roll is embedded in a pouch-type case of aluminum laminated sheet.

Among the secondary batteries as described above, the pouch-type batteries may be subjected to vision inspection to measure the appearance of the electrode tabs of the pouch-type battery cells before they are shipped as products. In addition, marking signs may be left on the electrode tabs assigned to each electrode to secure traceability of each electrode, and the movement of the electrodes may be tracked by vision inspection or the like. In this case, a structure for supporting the electrode tabs so that the electrode tabs do not shake during inspection of the marking signs on the electrode tabs becomes necessary.

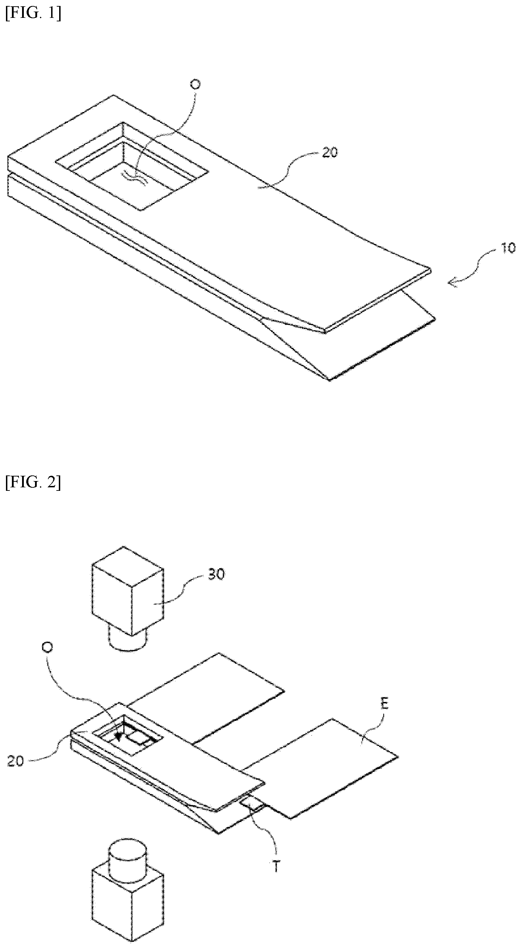

FIG. 1 illustrates a typical tab guide unit 10 capable of guiding an electrode tab T. According to FIG. 1, the conventional tab guide unit 10 includes a pair of guides 20 arranged in parallel, spaced apart by a predetermined distance in the vertical direction. The guide 20 may have an opening O formed to allow the electrode tab T passing between them to be exposed to the outside.

FIG. 2 illustrates a conventional electrode E tracking device including the tab guide unit 10 of FIG. 1 and a tracking unit 30. The tracking unit 30 is provided at a position corresponding to the opening O of the tab guide unit 10.

The electrode E passing through the pair of guides 20 moves so that the electrode tab T is exposed to the opening O. The tracking unit 30 can be a marker that forms markings on the electrode tab T, or a reader that identifies markings formed on the tab. When the electrode tab T of the electrode E passing between the guides 20 is exposed to the opening O, the tracking unit 30 provided as described above leaves a marking sign on the electrode tab T or inspects the marking sign.

The conventional tab guide unit 10 can flexibly adjust its position according to changes in the width and thickness of the transferred electrode E, position of the electrode tab, and the like.

In the process of adjusting the position of the tab guide unit 10 as described above, friction between mechanical parts can occur, causing fine foreign matter to float. If such foreign matter adheres to the electrode tab T, it can degrade the quality of the electrode E. Such degradation of the electrode E quality ultimately leads to a decrease in the performance of the secondary battery.

[Patent Document] Korean Published Patent No. 10-1605229

### [Description of the Invention]

### [Technical Problem]

Therefore, the present invention was devised to solve the above problems and aims to provide an electrode tracking device that can effectively collect foreign matter generated by friction or the like.

Other objects and advantages of the present invention will be understood from the following description and will become more apparent through the embodiments of the present invention. Additionally, it will be readily apparent that the objects and advantages of the present invention can be realized by the means and combinations described in the claims.

### [Technical Solution]

According to the present invention, the present invention provides an electrode tracking device for forming a marking on an electrode tab of an electrode being transferred in one direction, or identifying a marking formed on the electrode tab.

The electrode tracking device includes: a tracking part provided to move in at least one of horizontal and vertical directions, and including at least one tracking unit selected from a marker and a reader; a guide part including a first guide having an inclined surface at one end and supports one surface of the electrode tab, and a second guide having an inclined surface at a position corresponding to the inclined surface of the first guide and supports the other surface of the electrode tab; an interlocking part including a first support member coupled to the first guide at one end and coupled to the tracking part at the other end so as to be slidable in upward and downward direction, and a second support member coupled to the second guide at one end and coupled to the tracking part at the other end so as to be slidable in upward and downward direction; and a foreign matter accommodating part open upward, wherein the foreign matter accommodating part is coupled to either the tracking part or the interlocking part.

The electrode is transferred such that the electrode tab passes between the first guide and the second guide, wherein the first guide and the second guide may be arranged such that the entering electrode tab faces the inclined surfaces.

At least one of the first guide and the second guide included in the guide part includes an opening, wherein the electrode may be transferred such that the electrode tab is exposed through the opening.

The tracking part may include: a main body including a tracking unit therein, and including a first guide rail coupled to the first support member on one side; and a protruding member attached to one side of the main body, and including a second guide rail coupled to the second support member on one side.

The tracking part is disposed such that the transferred electrode passes the lower part, wherein the guide part may be provided at the lower part of the tracking part to guide the electrode tab of the transferred electrode.

The foreign matter accommodating part may be coupled to the support member located to be closer to the tracking part among the first support member and the second support member of the interlocking part.

The first guide is disposed below the transferred electrode, and the second guide is disposed to be interposed between the first guide and the main body, wherein the second guide may include an opening at a position corresponding to the tracking unit.

The second support member may include: a sliding part coupled to the protruding member to slide along the second guide rail, and extending downwardly along a longitudinal direction of the main body; a fixing part provided at the lower part of the sliding part, and coupled to the second guide; and a connecting part connecting the sliding part and the fixing part, wherein the foreign matter accommodating part may be coupled to the fixing part.

The foreign matter accommodating part and the second guide are respectively coupled to both sides of the fixing part, the second guide is disposed at a position corresponding to the tracking unit of the main body, and the foreign matter accommodating part may be disposed at a position corresponding to the first guide rail and the second guide rail.

The foreign matter accommodating part may include: a bottom plate; and side plates disposed to stand along the edges of the bottom plate, wherein the foreign matter accommodating part may be coupled such that the side plates are fixed to the second support member.

The tracking part is disposed such that the transferred electrode passes the upper part, wherein the guide part may be provided at the upper part of the tracking part to guide the electrode tab of the transferred electrode.

The foreign matter accommodating part may be coupled to the protruding member included in the tracking part.

The first guide is disposed above the transferred electrode, and the second guide is disposed to be interposed between the first guide and the main body, wherein the second guide may include an opening at a position corresponding to the tracking unit.

The foreign matter accommodating part may be disposed at a position corresponding to the first guide rail.

The foreign matter accommodating part may include: a bottom plate; and side plates disposed to stand along the edges of the bottom plate, wherein the foreign matter accommodating part may be coupled such that the side plates are fixed to the protruding member.

### [Advantageous Effects]

According to the present invention, it is possible to effectively remove foreign matter generated during the process of forming markings on the electrode tabs or identifying markings formed on the electrode tabs, thereby preventing the degradation of the electrode quality.

### [Brief Description of the Drawings]

FIG. 1 illustrates a conventional tab guide unit.
FIG. 2 illustrates the tab guide unit and tracking unit of FIG. 1.
FIG. 3 illustrates an electrode tracking device according to the first embodiment of the present invention.
FIG. 4 illustrates the electrode passing through the electrode tracking device of FIG. 3.
FIG. 5 illustrates an exploded view of a part of the electrode tracking device of FIG. 3.
FIG. 6 illustrates the arrangement of the tracking part and the second guide of the electrode tracking device according to the first embodiment.
FIG. 7 illustrates the foreign matter accommodating part included in the electrode tracking device according to the first embodiment of the present invention.
FIG. 8 illustrates the second support member of the interlocking part and the foreign matter accommodating part coupled to the second support member.
FIG. 9 illustrates the arrangement of the foreign matter accommodating part and the second guide.
FIG. 10 illustrates an embodiment of elevating the second support member of the electrode tracking device according to the first embodiment.
FIG. 11 illustrates an example of elevating the first support member of the electrode tracking device according to the first embodiment.
FIG. 12 illustrates an example of elevating both the first support member and the second support member of the electrode tracking device according to the first embodiment.
FIG. 13 illustrates an electrode tracking device according to the second embodiment of the present invention.
FIG. 14 illustrates the electrode passing through the electrode tracking device of FIG. 13.
FIG. 15 illustrates an exploded view of a part of the electrode tracking device of FIG. 13.
FIG. 16 illustrates the arrangement of the tracking part and the second guide of the electrode tracking device according to the second embodiment.
FIG. 17 illustrates the foreign matter accommodating part included in the electrode tracking device according to the second embodiment of the present invention.
FIG. 18 illustrates the protruding member and the foreign matter accommodating part coupled to the protruding member.
FIG. 19 illustrates an example of elevating the second support member of the electrode tracking device according to the second embodiment.
FIG. 20 illustrates an example of elevating the first support member of the electrode tracking device according to the second embodiment.
FIG. 21 illustrates an example of elevating both the first support member and the second support member of the electrode tracking device according to the second embodiment.

### [Best Mode for Carrying out the Invention]

Hereinafter, preferred embodiments of the present invention will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Therefore, the examples described in the present specification and the configurations shown in the drawings are merely preferred embodiments of the present invention and do not represent all the technical spirit of the present invention. It should be understood that there may be various equivalents and modifications that can replace these at the time of filing this application.

Moreover, specific descriptions of known configurations or functions related to the present invention may be omitted if it is determined that they may obscure the essence of the present invention.

The embodiments of the present invention are provided to explain the present invention more fully to those skilled in the art, and the shapes and sizes of components in the drawings may be exaggerated, omitted, or schematically shown for clearer explanation. Therefore, the size or ratio of each component does not completely reflect the actual size or ratio.

The present invention relates to an electrode tracking device that forms markings on the electrode tabs of an electrode being transferred in one direction, or identifies markings formed on the electrode tabs.

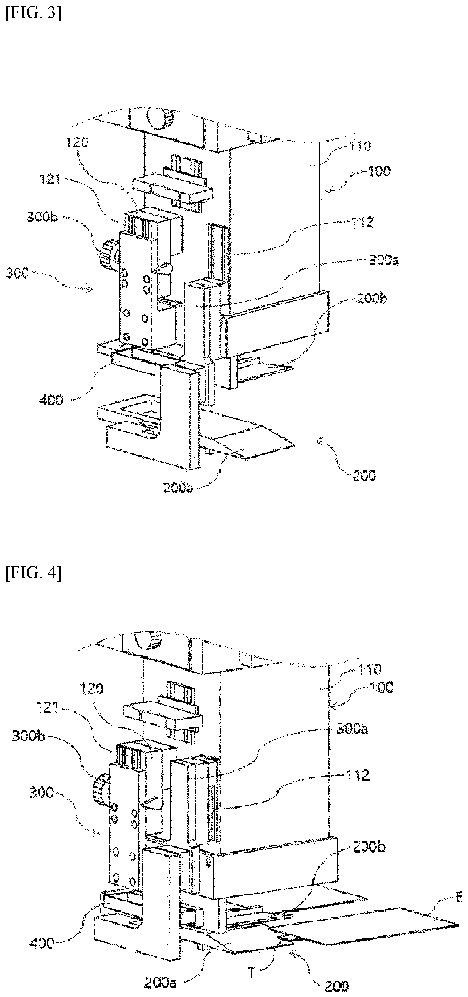

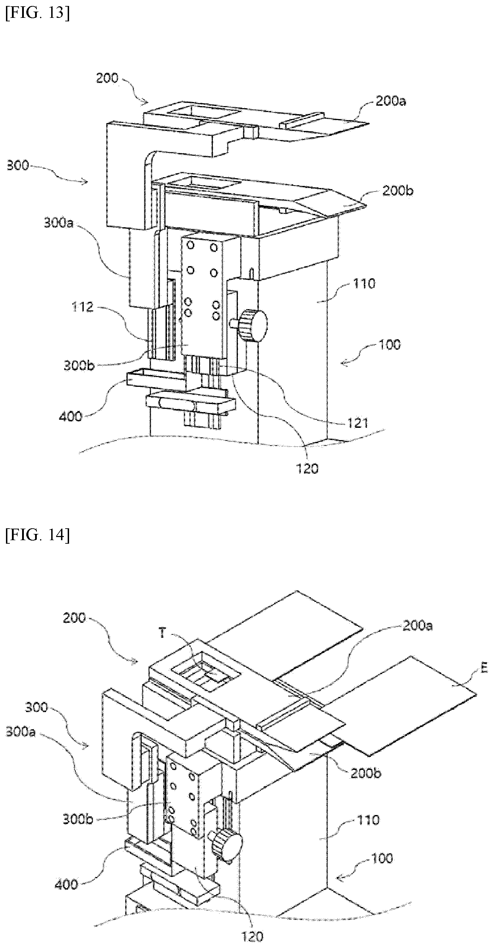

FIG. 3 to FIG. 12 relate to an electrode tracking device according to the first embodiment of the present invention, and FIG. 13 to FIG. 21 relate to an electrode tracking device according to the second embodiment of the present invention.

Hereinafter, the electrode tracking device of the present invention will be described with reference to the respective drawings.

### (First embodiment)

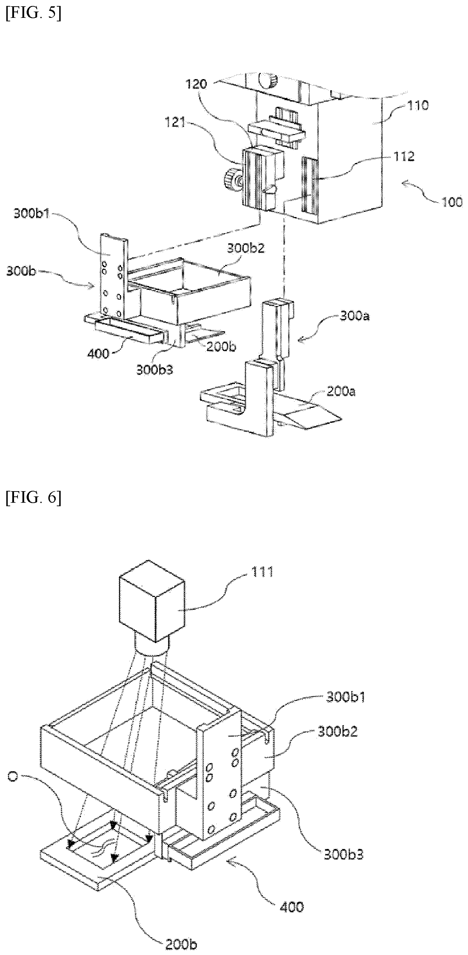

FIG. 3 relates to an electrode E tracking device according to the first embodiment of the present invention, FIG. 4 illustrates the electrode E passing through the electrode E tracking device of FIG. 3, and FIG. 5 is an exploded view of a part of the electrode E tracking device of FIG. 3.

The electrode E tracking device of the present invention, as shown in FIG. 3, includes a tracking part 100, a guide part 200, and an interlocking part 300.

As shown in FIG. 4, the tracking part 100 is disposed so that the transferred electrode E passes through the lower part.

The tracking part 100 includes a tracking unit 111 that forms markings on the electrode tab T of the transferred electrode E, or identifies markings formed on the electrode tab T.

The tracking unit 111 may be a marker that marks the electrode tab T with a laser, or a reader that identifies markings formed on the electrode tab T. If necessary, the tracking part 100 may include both a marker and a reader.

The tracking part 100 is provided to be movable in at least one of the horizontal and vertical directions.

The tracking part 100 includes a main body 110 that includes a tracking unit 111 therein, and includes a first guide rail 112 on one side.

The main body 110 has an open lower part, and the tracking unit 111 is provided within the main body 110 to be exposed through the opening O.

The tracking unit 111 is provided facing downward to form or identify markings on the electrode tab T passing through the lower part of the open main body 110.

The first guide rail 112 is formed in a straight line. More specifically, the first guide rail 112 extends in the longitudinal direction of the main body 110, i.e., in the upward and downward direction in the drawing.

The tracking part 100 further includes a second guide rail 121 extending horizontally in line with the first guide rail 112.

The second guide rail 121 is also formed in a straight line like the first guide rail 112 and is spaced apart at a predetermined distance from the first guide rail 112, maintaining a horizontal alignment.

The tracking part 100 may further include a protruding member 120 attached to one side of the main body 110, as shown in FIG. 3.

The protruding member 120 is coupled to the one side of the main body 110 in which the first guide rail 112 is formed.

The protruding member 120 is applied to avoid interference between operating parts and serves to create a height difference between the first guide rail 112 and the second guide rail 121.

Therefore, the second guide rail 121 may be formed on the main body 110 like the first guide rail 112, or it may be formed on the protruding member 120 coupled to the main body 110.

The electrode E tracking device of the present invention includes a guide part 200 that can guide the electrode tab T to the position of the tracking unit 111 during the process of forming or identifying markings on the electrode tab T by the tracking unit 111.

The guide part 200 is provided at the lower part of the tracking part 100 to guide the electrode tab T of the transferred electrode E.

The guide part 200 includes a first guide 200a having an inclined surface at one end, supporting one surface of the electrode E, and a second guide 200b having an inclined surface at a position corresponding to the inclined surface of the first guide 200a, supporting the other surface of the electrode tab T.

According to FIGS. 3 and 4, the first guide 200a and the second guide 200b are disposed to face each other at the lower part of the main body 110. The first guide 200a and the second guide 200b are spaced apart by a predetermined distance to allow the electrode tab T to pass between them.

The first guide 200a is disposed below the transferred electrode E, and the second guide 200b is disposed to be interposed between the first guide 200a and the main body 110.

The first guide 200a and the second guide 200b are disposed such that the incoming electrode tab T faces the inclined surfaces.

The electrode E moves horizontally so that the electrode tab T passes between the first guide 200a and the second guide 200b located at the lower part of the main body 110. At this time, the electrode tab T enters in the direction where the inclined surfaces of the first guide 200a and the second guide 200b are located. That is, the electrode tab T moves along the inclined surfaces of the first guide 200a and the second guide 200b towards the lower part of the main body 110.

At least one of the first guide 200a and the second guide 200b includes an opening O.

The second guide 200b of the electrode E tracking device according to the first embodiment of the present invention includes an opening O.

The second guide 200b includes an opening O at a position corresponding to the tracking unit 111.

The electrode E passing between the first guide 200a and the second guide 200b is transferred so that the electrode tab T is exposed to the opening O.

The tracking unit 111 of the tracking part 100 forms markings on or identifies markings on the electrode tab T exposed to the opening O of the guide part 200.

FIG. 6 shows the arrangement of the tracking part 100 and the second guide 200b. For ease of understanding, only the tracking unit 111 provided in the main body 110 is shown in the tracking part 100.

According to FIG. 6, the opening O of the second guide 200b is formed at a position corresponding to the tracking unit 111, and the tracking unit 111 is disposed towards the opening O of the second guide 200b.

If the tracking unit 111 is a marker, it can form markings on the electrode tab T passing through the opening O. Alternatively, if the tracking unit 111 is a reader, it can identify markings formed on the electrode tab T passing through the opening O.

The first guide 200a and the second guide 200b of the guide part 200 may be coupled to the tracking part 100 by the interlocking part 300.

The interlocking part 300 guides the guide part 200 to reciprocate along the guide rails included in the tracking part 100.

As shown in FIGS. 3 to 5, the interlocking part 300 includes a first support member 300a coupled to the first guide 200a at one end and coupled to the tracking part 100 at the other end to slide in upward and downward direction, and a second support member 300b coupled to the second guide 200b at one end and coupled to the tracking part 100 at the other end to slide in upward and downward direction.

Specifically, the first support member 300a is coupled to the first guide rail 112 to slide with respect to the main body 110, and the second support member 300b is also coupled to the second guide rail 121 to slide with respect to the main body 110.

When the first support member 300a slides upward on the first guide rail 112, the first guide 200a coupled to the first support member 300a rises. Conversely, when the first support member 300a slides downward on the first guide rail 112, the first guide 200a descends.

Additionally, when the second support member 300b slides upward on the second guide rail 121, the second guide 200b coupled to the second support member 300b rises. Conversely, when the second support member 300b slides downward on the second guide rail 121, the second guide 200b descends.

The second support member 300b consists of a sliding part 300b1, a fixing part 300b3, and a connecting part 300b2.

Specifically, the second support member 300b includes a sliding part 300b1 coupled to the protruding member 120 to slide with respect to the second guide rail 121, a fixing part 300b3 coupled to the second guide 200b, and a connecting part 300b2 with both ends connected to the sliding part 300b1 and the fixing part 300b3, respectively.

More specifically, as shown in FIG. 5, the second support member 300b is coupled to the protruding member 120 to slide with respect to the second guide rail 121, and includes a sliding part 300b1 extending downward along the longitudinal direction of the main body 110, a fixing part 300b3 provided at the lower part of the sliding part 300b1 and coupled to the second guide 200b, and a connecting part 300b2 connecting the sliding part 300b1 and the fixing part 300b3.

When the first support member 300a and the second support member 300b slide along the first guide rail 112 and the second guide rail 121, friction may occur between each support member 300a, 300b and the guide rails 112, 121.

Friction at the contact points of the support members 300a, 300b and the guide rails 112, 121 can cause fine foreign matter such as metal powder to float. If this foreign matter falls onto the electrode E, it can cause quality degradation and defects in the secondary battery.

The electrode E tracking device of the present invention is characterized by the application of a foreign matter accommodating part 400 that can collect foreign matter generated in the area where friction occurs.

The foreign matter accommodating part 400 is open upward, and serves to catch foreign matter falling from the open upper part.

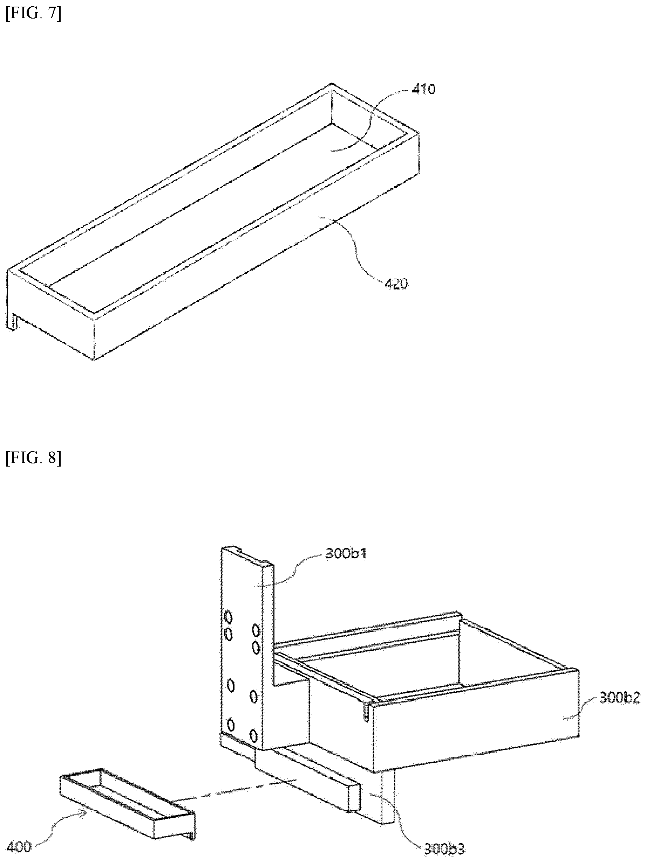

FIG. 7 illustrates the foreign matter accommodating part 400 of the present invention. As shown in FIG. 7, the foreign matter accommodating part 400 includes a bottom plate 410 and side plates 420 disposed to stand along the edges of the bottom plate 410.

Floating foreign matter may accumulate and be collected on the bottom plate 410 of the foreign matter accommodating part 400.

The foreign matter accommodating part 400 may be coupled to either the tracking part 100 or the interlocking part 300.

The electrode E tracking device according to the first embodiment of the present invention is characterized in that the foreign matter accommodating part 400 is coupled to the interlocking part 300. More specifically, the foreign matter accommodating part 400 is coupled to the one located to be closer to the tracking part 100 among the first support member 300a and the second support member 300b of the interlocking part 300.

According to FIGS. 3 to 5, the foreign matter accommodating part 400 is coupled to the second support member 300b.

FIG. 8 illustrates the second support member 300b of the interlocking part 300 and the foreign matter accommodating part 400 coupled to the second support member 300b.

As shown in FIG. 8, the foreign matter accommodating part 400 is coupled to be fixed to the second support member 300b. More specifically, the foreign matter accommodating part 400 is fixed such that the side plate is fixed to one side of the fixing part 300b3.

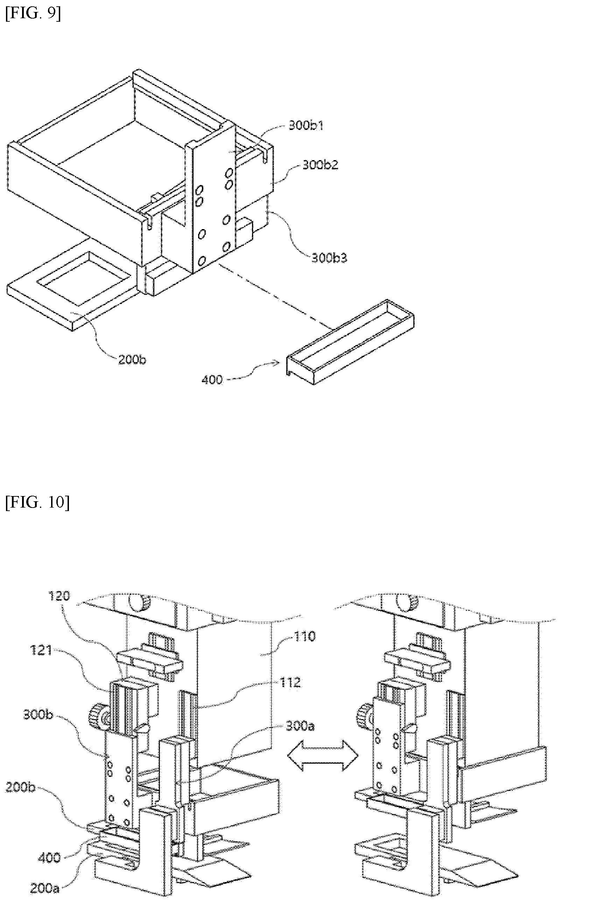

FIG. 9 illustrates the arrangement of the foreign matter accommodating part 400 and the second guide 200b. The foreign matter accommodating part 400 and the second guide 200b are respectively coupled to both sides of the fixing part 300b3 as shown in FIG. 9. At this time, the second guide 200b is disposed at a position corresponding to the tracking unit 111 of the main body 110, and the foreign matter accommodating part 400 is coupled to the side opposite to the side of the fixing part 300b3 where the second guide 200b is coupled.

The foreign matter accommodating part 400 is disposed at a position corresponding to the first guide rail 112 and the second guide rail 121 as shown in FIGS. 3 to 5.

Therefore, the foreign matter accommodating part 400 can effectively collect foreign matter generated from the first guide rail 112 and the second guide rail 121.

The electrode E tracking device of the present invention can adjust the position of the tracking part 100 and the position and spacings the first guide 200a and the second guide 200b included in the guide part 200 as the thickness and width of the target electrode E change.

To adjust the positions of the first guide 200a and the second guide 200b, the first support member 300a and the second support member 300b included in the interlocking part 300 slide with respect to the main body 110. The foreign matter generated at this time accumulates in the foreign matter accommodating part 400 coupled to the fixing part 300b3.

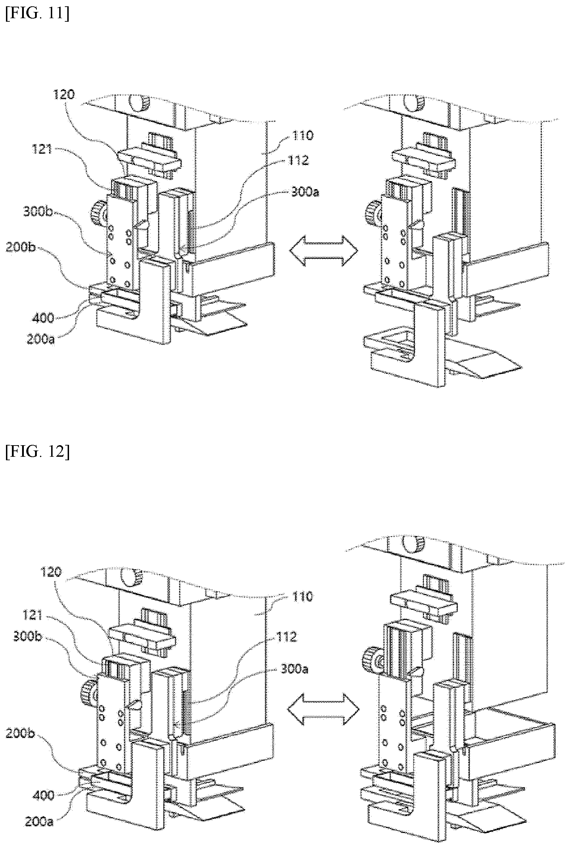

FIG. 10 illustrates an example of elevating the second support member 300b, FIG. 11 illustrates an example of elevating the first support member 300a, and FIG. 12 illustrates an example of elevating the first support member 300a and the second support member 300b together.

According to FIG. 10, as the second support member 300b moves up and down along the second guide rail 121, friction occurs at the contact point between the second support member 300b and the second guide rail 121. Fine foreign matter may be generated on the surface of the second support member 300b or the second guide rail 121 due to the friction, but the foreign matter accommodating part 400 provided at the lower part collects the floating foreign matter. Therefore, the electrode E tracking device of the present invention can prevent the electrode E and the surface of the electrode tab T from being contaminated by the foreign matter.

According to FIG. 11, as the first support member 300a moves up and down along the first guide rail 112, friction occurs at the contact point between the first support member 300a and the first guide rail 112. Fine foreign matter may be generated on the surface of the first support member 300a or the first guide rail 112 due to the friction, but the foreign matter accommodating part 400 provided at the lower part collects the floating foreign matter. Therefore, the electrode E tracking device of the present invention can prevent the electrode E and the surface of the electrode tab T from being contaminated by the foreign matter.

According to FIG. 12, as the first support member 300a and the second support member 300b respectively move up and down along the first guide rail 112 and the second guide rail 121, friction occurs. Fine foreign matter may be generated on the surfaces of the first support member 300a, the second support member 300b, the first guide rail 112, and the second guide rail 121 due to the friction, but the foreign matter accommodating part 400 provided at the lower part collects the floating foreign matter. Therefore, the electrode E tracking device of the present invention can prevent the electrode E and the surface of the electrode tab T from being contaminated by the foreign matter.

### (Second Embodiment)

The electrode E tracking device of the present invention can also be used by inverting the tracking part 100, guide part 200, and interlocking part 300 upside down.

The electrode E tracking device according to the second embodiment of the present invention is characterized in that the foreign matter accommodating part 400 is coupled to the tracking part 100 by inverting the tracking part 100, guide part 200, and interlocking part 300 of the electrode E tracking device according to the first embodiment.

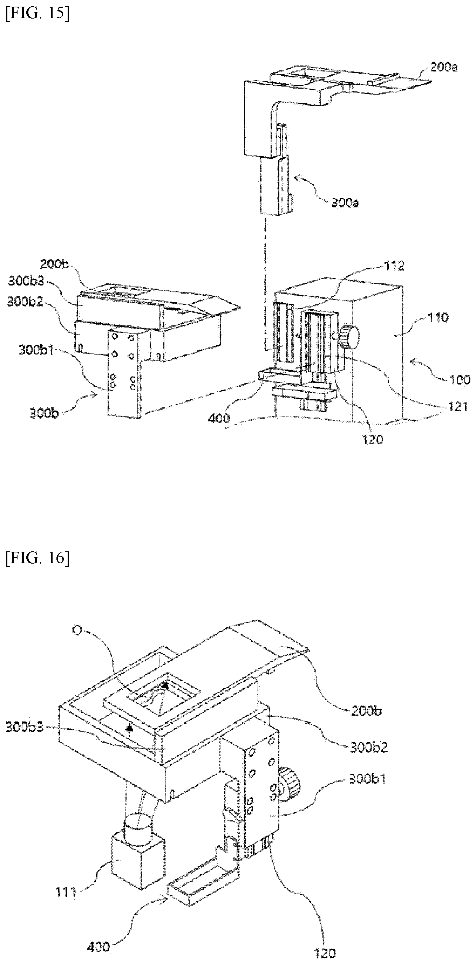

FIG. 13 illustrates the electrode E tracking device according to the second embodiment of the present invention, FIG. 14 illustrates the electrode E passing through the electrode E tracking device of FIG. 13, and FIG. 15 is an exploded view of a part of the electrode E tracking device of FIG. 13.

The electrode E tracking device of the present invention, as shown in FIG. 13, includes a tracking part 100, a guide part 200, and an interlocking part 300.

As shown in FIG. 14, the tracking part 100 is disposed so that the transferred electrode E passes the upper part.

The tracking part 100 includes a tracking unit 111 that forms markings on the electrode tab T of the transferred electrode E, or identifies markings formed on the electrode tab T.

The tracking unit 111 may be a marker that marks the electrode tab T with a laser, or a reader that identifies markings formed on the electrode tab T. If necessary, the tracking part 100 may include both a marker and a reader.

The tracking part 100 is configured to be movable in at least one of the horizontal and vertical directions.

The tracking part 100 includes a main body 110 that includes the tracking unit 111 therein, and includes a first guide rail 112 on one side.

The main body 110 has an open upper part, and the tracking unit 111 is provided within the main body 110 to be exposed through the opening O.

The tracking unit 111 is provided facing upward to form or identify markings on the electrode tab T passing through the upper part of the open main body 110.

The first guide rail 112 is formed in a straight line. More specifically, the first guide rail 112 extends in the longitudinal direction of the main body 110, i.e., in the upward and downward direction in the drawing.

The tracking part 100 further includes a second guide rail 121 extending horizontally in line with the first guide rail 112.

The second guide rail 121 is also formed in a straight line like the first guide rail 112, and is spaced apart at a predetermined distance from the first guide rail 112, maintaining a horizontal alignment.

The tracking part 100 may further include a protruding member 120 attached to one side of the main body 110, as shown in FIG. 13.

The protruding member 120 is coupled to one side on which the first guide rail 112 is formed among the sides corresponding to the perimeter of the main body 110.

The protruding member 120 is applied to avoid interference between operating parts, and serves to create a height difference between the first guide rail 112 and the second guide rail 121.

Therefore, the second guide rail 121 may be formed on the main body 110 like the first guide rail 112, or it may be formed on the protruding member 120 coupled to the main body 110.

The electrode E tracking device of the present invention includes a guide part 200 that can guide the electrode tab T to the position of the tracking unit 111 during the process of the tracking unit 111 forming or identifying markings on the electrode tab T.

The guide part 200 is provided at the upper part of the tracking part 100 to guide the electrode tab T of the transferred electrode E.

The guide part 200 includes a first guide 200a having an inclined surface at one end, supporting one surface of the electrode E, and a second guide 200b having an inclined surface at a position corresponding to the inclined surface of the first guide 200a. supporting the other surface of the electrode tab T.

According to FIGS. 13 and 14, the first guide 200a and the second guide 200b are disposed to face each other at the upper part of the main body 110. The first guide 200a and the second guide 200b are spaced apart by a predetermined distance to allow the electrode tab T to pass between them.

The first guide 200a is disposed above the transferred electrode E, and the second guide 200b is disposed to be interposed between the first guide 200a and the main body 110.

The first guide 200a and the second guide 200b are disposed such that the incoming electrode tab T faces the inclined surfaces.

The electrode E moves horizontally so that the electrode tab T passes between the first guide 200a and the second guide 200b located at the upper part of the main body 110. At this time, the electrode tab T enters in the direction where the inclined surfaces of the first guide 200a and the second guide 200b are located. That is, the electrode tab T moves along the inclined surfaces of the first guide 200a and the second guide 200b towards the upper part of the main body 110.

At least one of the first guide 200a and the second guide 200b includes an opening O.

The second guide 200b of the electrode E tracking device according to the second embodiment of the present invention includes an opening O.

The second guide 200b includes an opening O at a position corresponding to the tracking unit 111.

The electrode E passing between the first guide 200a and the second guide 200b is transferred so that the electrode tab T is exposed to the opening O.

The tracking unit 111 of the tracking part 100 forms markings on or identifies markings on the electrode tab T exposed to the opening O of the guide part 200.

FIG. 16 illustrates the arrangement of the tracking part 100 and the second guide 200b. For ease of understanding, only the tracking unit 111 provided in the main body 110 is shown in the tracking part 100.

According to FIG. 16, the opening O of the second guide 200b is formed at a position corresponding to the tracking unit 111, and the tracking unit 111 is disposed towards the opening O of the second guide 200b.

If the tracking unit 111 is a marker, it can form markings on the electrode tab T passing through the opening O. Alternatively, if the tracking unit 111 is a reader, it can identify markings formed on the electrode tab T passing through the opening O.

The first guide 200a and the second guide 200b of the guide part 200 may be coupled to the tracking part 100 by the interlocking part 300.

The interlocking part 300 guides the guide part 200 to reciprocate along the guide rails included in the tracking part 100.

As shown in FIG. 13 to FIG 15, the interlocking part 300 includes a first support member 300a coupled to the first guide 200a at one end and coupled to the tracking part 100 so that the other end can slide in the upward and downward direction, and a second support member 300b coupled to the second guide 200b at one end and coupled to the tracking part 100 so that the other end can slide in the upward and downward direction.

Specifically, the first support member 300a is coupled to the first guide rail 112 to slide with respect to the main body 110, and the second support member 300b is also coupled to the second guide rail 121 to slide with respect to the main body 110.

When the first support member 300a slides upward on the first guide rail 112, the first guide 200a coupled to the first support member 300a rises. Conversely, when the first support member 300a slides downward on the first guide rail 112, the first guide 200a descends.

Additionally, when the second support member 300b slides upward on the second guide rail 121, the second guide 200b coupled to the second support member 300b rises. Conversely, when the second support member 300b slides downward on the second guide rail 121, the second guide 200b descends.

The second support member 300b consists of a sliding part 300b1, a fixing part 300b3, and a connecting part 300b2.

Specifically, the second support member 300b includes a sliding part 300b1 coupled to the protruding member 120 to slide with respect to the second guide rail 121, a fixing part 300b3 coupled to the second guide 200b, and a connecting part 300b2 with both ends connected to the sliding part 300b1 and the fixing part 300b3, respectively.

More specifically, as shown in FIG. 15, the second support member 300b includes a sliding part 300b1 coupled to the protruding member 120 to slide with respect to the second guide rail 121 and extending upward along the longitudinal direction of the main body 110, a fixing part 300b3 provided at the upper part of the sliding part 300b1 and coupled to the second guide 200b, and a connecting part 300b2 connecting the sliding part 300b1 and the fixing part 300b3.

When the first support member 300a and the second support member 300b slide along the first guide rail 112 and the second guide rail 121, friction may occur between each support member 300a, 300b and the guide rails 112, 121.

Friction at the contact points of the support members 300a, 300b and the guide rails 112, 121 can cause fine foreign matter such as metal powder to float. If this foreign matter falls onto the electrode E, it can cause quality degradation and defects in the secondary battery.

The electrode E tracking device of the present invention is characterized by the application of a foreign matter accommodating part 400 that can collect foreign matter generated in the area where friction occurs.

The foreign matter accommodating part 400 is open to the upper part, and serves to catch foreign matter falling from the open upper part.

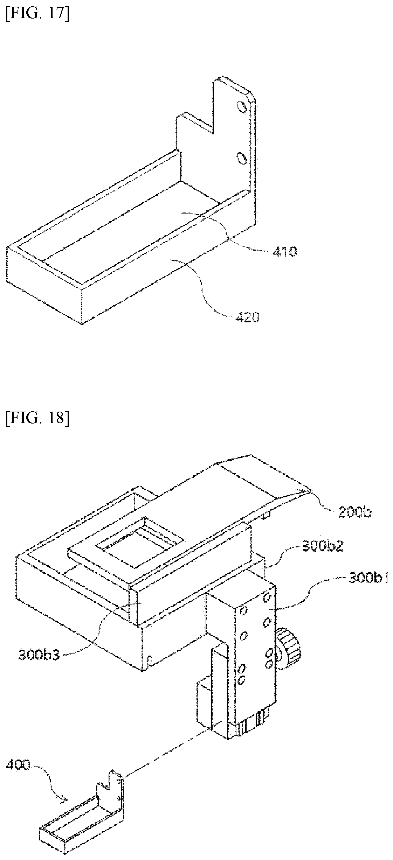

FIG. 17 illustrates the foreign matter accommodating part 400 of the present invention. As shown in FIG. 17, the foreign matter accommodating part 400 includes a bottom plate 410 and side plates 420 disposed to stand along the edges of the bottom plate 410.

Floating foreign matter can accumulate and be collected on the bottom plate 410 of the foreign matter accommodating part 400.

The foreign matter accommodating part 400 can be coupled to either the tracking part 100 or the interlocking part 300.

The electrode E tracking device according to the second embodiment of the present invention is characterized in that the foreign matter accommodating part 400 is coupled to the tracking part 100. More specifically, the foreign matter accommodating part 400 is coupled to the protruding member 120 included in the tracking part 100.

According to FIGS. 13 to 15, the foreign matter accommodating part 400 is disposed at the side of the protruding member 120.

FIG. 18 illustrates the protruding member 120 and the foreign matter accommodating part 400 coupled to the protruding member 120.

The foreign matter accommodating part 400 is coupled to be fixed to one side of the protruding member 120 as shown in FIG. 18. More specifically, the foreign matter accommodating part 400 is fixed such that the side plate is fixed to the side of the protruding member 120.

The foreign matter accommodating part 400 is disposed at a position corresponding to the first guide rail 112 as shown in FIGS. 13 to 15.

Therefore, the foreign matter accommodating part 400 can effectively collect foreign matter generated from the first guide rail 112.

The electrode E tracking device of the present invention can adjust the positions of the tracking part 100 and the positions and spacings of the first guide 200a and the second guide 200b included in the guide part 200 as the thickness and width of the target electrode E change.

To adjust the positions of the first guide 200a and the second guide 200b, the first support member 300a and the second support member 300b included in the interlocking part 300 slide with respect to the main body 110. The foreign matter generated at this time accumulates in the foreign matter accommodating part 400 coupled to the protruding member 120.

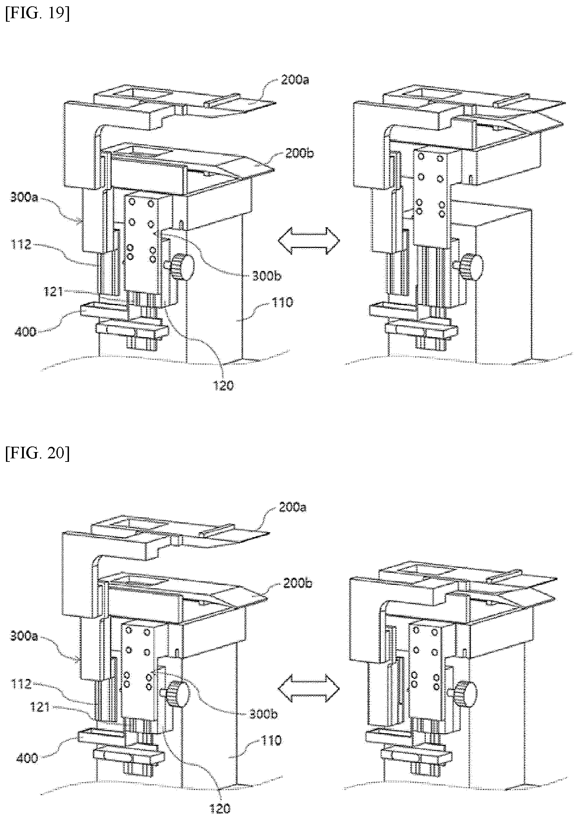

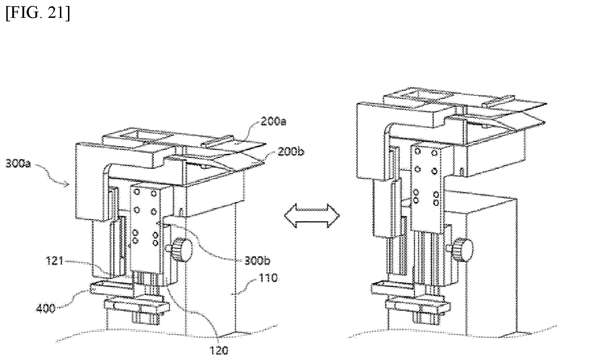

FIG. 19 illustrates an example of elevating the second support member 300b, FIG. 20 illustrates an example of elevating the first support member 300a, and FIG. 21 illustrates an example of elevating the first support member 300a and the second support member 300b together.

According to FIG. 19, as the second support member 300b moves up and down along the second guide rail 121, friction occurs at the contact point between the second support member 300b and the second guide rail 121. Fine foreign matter may be generated on the surface of the second support member 300b or the second guide rail 121 due to the friction, but the foreign matter accommodating part 400 provided at the lower part collects some of the floating foreign matter. Therefore, the electrode E tracking device of the present invention can minimize contamination of the electrode E and the surface of the electrode tab T by the foreign matter.

According to FIG. 20, as the first support member 300a moves up and down along the first guide rail 112, friction occurs at the contact point between the first support member 300a and the first guide rail 112. Fine foreign matter may be generated on the surface of the first support member 300a or the first guide rail 112 due to the friction, but the foreign matter accommodating part 400 provided at the lower part collects the floating foreign matter. Therefore, the electrode E tracking device of the present invention can prevent contamination of the electrode E and the surface of the electrode tab T by the foreign matter.

According to FIG. 21, as the first support member 300a and the second support member 300b move up and down along the first guide rail 112 and the second guide rail 121, respectively, friction occurs. Fine foreign matter may be generated on the surfaces of the first support member 300a, the second support member 300b, the first guide rail 112, and the second guide rail 121 due to the friction, but the foreign matter accommodating part 400 provided at the lower part collects the floating foreign matter. Therefore, the electrode E tracking device of the present invention can prevent contamination of the electrode E and the surface of the electrode tab T by the foreign matter.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present application.

### [Reference numerals]

10: (PRIOR ART) TAB GUIDE UNIT
20: (PRIOR ART) GUIDE
30: (PRIOR ART) TRACKING UNIT
100: TRACKING PART
110: MAIN BODY
111: TRACKING UNIT
112: FIRST GUIDE RAIL
120: PROTRUDING MEMBER
121: SECOND GUIDE RAIL
200: GUIDE PART
200a: FIRST GUIDE
200b: SECOND GUIDE
300: INTERLOCKING PART
300a: FIRST SUPPORT MEMBER
300b: SECOND SUPPORT MEMBER
300b1: SLIDING PART
300b2: CONNECTING PART
300b3: FIXING PART
400: FOREIGN MATTER ACCOMMODATING PART
410: BOTTOM PLATE
420: SIDE PLATE
E: ELECTRODE
T: ELECTRODE TAB
O: OPENING

## Claims

1. An electrode tracking device for forming a marking on an electrode tab of an electrode being transferred in one direction, or identifying a marking formed on the electrode tab, comprising:
a tracking part provided to move in at least one of horizontal and vertical directions, and including at least one tracking unit selected from a marker and a reader;
a guide part including a first guide having an inclined surface at one end and supports one surface of the electrode tab, and a second guide having an inclined surface at a position corresponding to the inclined surface of the first guide and supports the other surface of the electrode tab;
an interlocking part including a first support member coupled to the first guide at one end and coupled to the tracking part at the other end so as to be slidable in upward and downward direction, and a second support member coupled to the second guide at one end and coupled to the tracking part at the other end so as to be slidable in upward and downward direction; and
a foreign matter accommodating part open upward, wherein
the foreign matter accommodating part is coupled to either the tracking part or the interlocking part.

2. The electrode tracking device according to claim 1, wherein
the electrode is transferred such that the electrode tab passes between the first guide and the second guide, and
the first guide and the second guide are arranged such that the entering electrode tab faces the inclined surfaces of the first guide and the second guide.

3. The electrode tracking device according to claim 1, wherein:
at least one of the first guide and the second guide included in the guide part includes an opening, and
the electrode is transferred such that the electrode tab is exposed through the opening.

4. The electrode tracking device according to claim 1, wherein
the tracking part comprises:
a main body including a tracking unit therein, and including a first guide rail coupled to the first support member on one side; and
a protruding member attached to one side of the main body, and including a second guide rail coupled to the second support member on one side.

5. The electrode tracking device according to claim 4, wherein
the tracking part is disposed such that the transferred electrode passes a lower part thereof, and
the guide part is provided at the lower part of the tracking part to guide the electrode tab of the transferred electrode.

6. The electrode tracking device according to claim 5, wherein
the foreign matter accommodating part is coupled to the one located to be closer to the tracking part among the first support member and the second support member of the interlocking part.

7. The electrode tracking device according to claim 5, wherein
the first guide is disposed below the transferred electrode, and the second guide is disposed to be interposed between the first guide and the main body, and
the second guide includes an opening at a position corresponding to the tracking unit.

8. The electrode tracking device according to claim 5, wherein
the second support member comprises:
a sliding part coupled to the protruding member to slide along the second guide rail, and extending downwardly along a longitudinal direction of the main body;
a fixing part provided at the lower part of the sliding part, and coupled to the second guide; and
a connecting part connecting the sliding part and the fixing part, and
the foreign matter accommodating part is coupled to the fixing part.

9. The electrode tracking device according to claim 8, wherein
the foreign matter accommodating part and the second guide are respectively coupled to both sides of the fixing part,
the second guide is disposed at a position corresponding to the tracking unit of the main body, and
the foreign matter accommodating part is disposed at a position corresponding to the first guide rail and the second guide rail.

10. The electrode tracking device according to claim 5, wherein
the foreign matter accommodating part comprises:
a bottom plate; and
side plates disposed to stand along the edges of the bottom plate, and
the foreign matter accommodating part is coupled such that the side plates are fixed to the second support member.

11. The electrode tracking device according to claim 4, wherein
the tracking part is disposed such that the transferred electrode passes an upper part thereof, and
the guide part is provided at the upper part of the tracking part to guide the electrode tab of the transferred electrode.

12. The electrode tracking device according to claim 11, wherein
the foreign matter accommodating part is coupled to the protruding member included in the tracking part.

13. The electrode tracking device according to claim 11, wherein
the first guide is disposed above the transferred electrode, and the second guide is disposed to be interposed between the first guide and the main body, and
the second guide includes an opening at a position corresponding to the tracking unit.

14. The electrode tracking device according to claim 12, wherein
the foreign matter accommodating part is disposed at a position corresponding to the first guide rail.

15. The electrode tracking device according to claim 11, wherein
the foreign matter accommodating part comprises:
a bottom plate; and
side plates disposed to stand along the edges of the bottom plate, and
the foreign matter accommodating part is coupled such that the side plates are fixed to the protruding member.
